(19) Europäisches Patentamt
European Patent Office
Office européen des brevets

(11) **EP 4 597 470 A1**

(12) **EUROPEAN PATENT APPLICATION**
published in accordance with Art. 153(4) EPC

(43) Date of publication:
**06.08.2025 Bulletin 2025/32**

(21) Application number: **22960792.4**

(22) Date of filing: **27.09.2022**

(51) International Patent Classification (IPC):
**G08G 1/16** (2006.01)

(52) Cooperative Patent Classification (CPC):
**G08G 1/16**

(86) International application number:
**PCT/JP2022/035818**

(87) International publication number:
**WO 2024/069728 (04.04.2024 Gazette 2024/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Hitachi Astemo, Ltd.
Ibaraki 312-8503 (JP)**

(72) Inventors:
• WANG Jian
  **Hitachinaka-shi, Ibaraki 312-8503 (JP)**
• TAKAHAMA Taku
  **Hitachinaka-shi, Ibaraki 312-8503 (JP)**

(74) Representative: **MERH-IP Matias Erny Reichl
Hoffmann
Patentanwälte PartG mbB
Paul-Heyse-Straße 29
80336 München (DE)**

(54) **VEHICLE CONTROL DEVICE**

(57)      Provided is a vehicle control device that enables earlier and correct actuation of an alarm and a brake of an AEB system by improving the responsiveness and accuracy of estimation of a traveling path of a host vehicle. According to the present invention, for example, a future steering angle is estimated highly responsively from a yaw angle during turning as a change in a steering speed at the start of turn of the steering wheel and at turning back of the steering wheel is taken into consideration, and the estimated steering angle is limited to prevent it from exceeding a steady-state steering angle (≈ maximum steering angle) at the time of making a right or left turn at an intersection, the steady-state steering angle being determined from the vehicle's behavior at an initial stage of its turning. This prevents overestimation.

FIG. 1

EP 4 597 470 A1

## Description

Technical Field

The present invention relates to a vehicle control device.

Background Art

PTL 1 discloses a system that when determining a possibility of a vehicle's collision at the time of making a turn (right turn or left turn) at an intersection, estimates a steering wheel angle, based on a variation in a steering wheel angle at the current time, and estimates a traveling track of the vehicle making a turn at the intersection.

Citation List

Patent Literature

PTL 1: JP 2018-106589 A

Summary of Invention

Technical Problem

According to the conventional technique described in PTL 1 described above, a traveling path of the vehicle making a turn at the intersection is estimated as a variation in the steering wheel angle and a limit value thereof are taken into consideration. This conventional technique, however, poses the following problems. Because no correction of the variation in the steering wheel angle is performed, steering angle estimation at the start of turn of the steering wheel and at turn back of the steering wheel is poor in responsiveness. The limit value of the steering wheel angle cannot be uniquely determined solely by an intersection angle of the road, and no method of deriving the limit value is mentioned. For these reasons, highly accurately estimating the traveling path of the host vehicle is difficult, which creates a situation where a delay in response and a drop in accuracy readily occur. This brings a concern that an alarm or a brake of an autonomous emergency braking (AEB) system is not actuated until a point of time right before a collision event.

The present invention has been conceived in view of the above problems, and an object of the present invention is to provide a vehicle control device that enables earlier and correct actuation of an alarm and a brake of an AEB system by improving the responsiveness and accuracy of estimation of a traveling path of a host vehicle.

Solution to Problem

A vehicle control device of the present invention that solves the above problems is a vehicle control device that controls a host vehicle making a turn and traveling in an intersection. The vehicle control device includes: a target sensor that detects a target present around the host vehicle; a target traveling path estimation unit that estimates a traveling path of the target detected by the target sensor; a steering angle sensor that detects a steering angle of the host vehicle being traveling; and a vehicle position estimation unit that calculates a steering speed from the steering angle detected by the steering angle sensor, estimates a future steering angle, based on the steering speed and on a given correction gain, estimates a maximum value of a steady-state steering angle in estimation of the future steering angle, based on a rate of change in the steering angle, and estimates a future position of the host vehicle, based on the future steering angle and on the maximum value of the steady-state steering angle.

According to the present invention, for example, a future steering angle is estimated highly responsively from a yaw angle during turning as a change in a steering speed at the start of turn of the steering wheel and at turning back of the steering wheel is taken into consideration, and the estimated steering angle is limited to prevent it from exceeding a steady-state steering angle (≈ maximum steering angle) at the time of making a right or left turn at an intersection, the steady-state steering angle being determined from the vehicle's behavior at an initial stage of its turning. This prevents overestimation.

Advantageous Effects of Invention

According to the present invention, improving the responsiveness and accuracy of estimation of the traveling path of the host vehicle reduces malfunctions of the AEB system and enables earlier actuation of the AEB system to a normal operation target.

Further features related to the present invention will be made clear by description of the present specification and the accompanying drawings. Problems, configurations, and effects other than those described above will be made clear by the following description of embodiments.

Brief Description of Drawings

[FIG. 1] FIG. 1 is a block diagram of an AEB system according to a first embodiment.
[FIG. 2] FIG. 2 is a flowchart for explaining the operation content of an AEB control processing unit of the first embodiment.
[FIG. 3A] FIG. 3A is a diagram for explaining an example of deriving a correction gain to a steering speed for steering angle estimation (based on a yaw angle).
[FIG. 3B] FIG. 3B is a diagram for explaining an example of deriving the correction gain to the steering speed for steering angle estimation (based on a traveling distance) .

[FIG. 3C] FIG. 3C is a diagram for describing an effect of the correction gain to the steering speed for steering angle estimation.

[FIG. 4A] FIG. 4A is a diagram for explaining an example of deriving a steady-state steering angle for steering angle estimation (based on a traveling distance).

[FIG. 4B] FIG. 4B is a diagram for explaining an example of deriving the steady-state steering angle for steering angle estimation (based on a yaw angle).

[FIG. 5A] FIG. 5A is a diagram for explaining a problem in a case of a delay in prediction and an effect achieved by the present invention.

[FIG. 5B] FIG. 5B is a diagram for explaining a problem in a case of prediction of excessive turn and an effect achieved by the present invention.

[FIG. 6] FIG. 6 is a block diagram of an AEB system according to a second embodiment.

[FIG. 7] FIG. 7 is a flowchart for explaining the operation content of an AEB control processing unit of the second embodiment.

Description of Embodiments

Embodiments of the present invention will hereinafter be described in detail with reference to the drawings. It should be noted that, in each embodiment, components having the same function are denoted by the same reference numerals and redundant description may be omitted.

[First Embodiment]

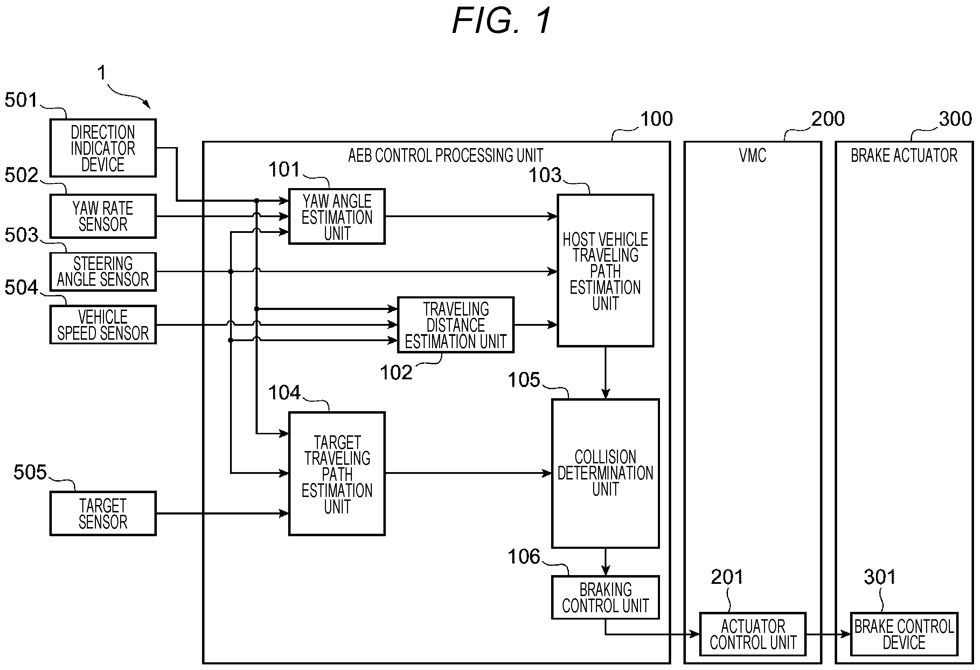

FIG. 1 is a block diagram of an AEB system according to a first embodiment.

As shown in FIG. 1, an AEB system 1 includes an AEB control processing unit 100, a vehicle motion controller (VMC) 200, and a brake actuator 300. The AEB control processing unit 100 and the VMC 200 make up an in-vehicle ECU having a CPU and a memory. The VMC200 includes an actuator control unit 201 as its internal function, the actuator control unit 201 performing engine control, steering control, and brake control of a host vehicle. When receiving a braking G instruction from the AEB control processing unit 100, the actuator control unit 201 outputs a control signal to the brake actuator 300. The brake actuator 300 includes a brake control device 301 that receives a control signal from the actuator control unit 201 and that performs brake control, based on the control signal.

The AEB control processing unit 100 performs braking assist control of the host vehicle according to a possibility of collision between the host vehicle and an obstacle (a target present around the host vehicle). The AEB control processing unit 100 of this embodiment constitutes a vehicle control device that controls (performs braking assist control of) the host vehicle making a turn (right turn or left turn) in an intersection and traveling on. A direction indicator device 501, a yaw rate sensor 502, a steering angle sensor 503, a vehicle speed sensor 504, and a target sensor 505 are connected to the input side of the AEB control processing unit 100.

The direction indicator device 501 detects, for example, a state of the driver's operation of the direction indicator. The yaw rate sensor 502 detects a yaw rate of the host vehicle. The steering angle sensor 503 detects a steering angle of the steering wheel of the host vehicle. The vehicle speed sensor 504 detects a vehicle speed from the number of revolutions of wheels and the like of the host vehicle. The target sensor 505 is a sensor that detects a target present around the host vehicle. For example, at least one of a monocular camera, a stereo camera, a sonar, an infrared sensor, a radar, and a LiDAR can be used as the target sensor 505.

The AEB control processing unit 100 is incorporated in the in-vehicle electronic control unit (ECU) that is an ADAS controller or AD controller, and controls the AEB system. The AEB control processing unit 100 includes, as its internal functions, a yaw angle estimation unit 101, a traveling distance estimation unit 102, a host vehicle traveling path estimation unit (vehicle position estimation unit) 103, a target traveling path estimation unit 104, a collision determination unit 105, and a braking control unit 106. The AEB control processing unit 100 performs detection of an obstacle and calculation of a predicted path of the host vehicle, determines a possibility of collision between the host vehicle and an obstacle, determines the start of braking, using a time to collision TTC or the like, when determining that the host vehicle is going to collide with the obstacle, and calculates a braking G instruction necessary for collision avoidance and outputs the braking G instruction to the VMC 200 when determining the start of braking.

The yaw angle estimation unit 101 calculates a yaw angle from the point of start of the host vehicle's right or left turn, using a steering angle and a yaw rate of the host vehicle.

The traveling distance estimation unit 102 calculates a traveling distance from the point of start of the host vehicle's a right or left turn, using a vehicle speed from the point of start of the host vehicle's a right or left turn.

The host vehicle traveling path estimation unit 103 estimates a future steering angle highly responsively from a yaw angle during turning, while taking into consideration a change in a steering speed (variation in a steering angle per unit time) at the start of turn of the steering wheel and at turn back of the steering wheel, limits the estimated steering angle to prevent it from exceeding a steady-state steering angle (≈ maximum steering angle) at the time of making a right or left turn at an intersection, the steady-state steering angle being determined from the vehicle's behavior at an initial stage of its turning, and derives an estimated path (a future position and a traveling path) of the host vehicle, using the estimated steering angle and a vehicle speed (the details of this process will be described later).

The target traveling path estimation unit 104 derives an estimated path (a future position and a traveling path) of a target detected by target sensor 505.

The collision determination unit 105 determines a possibility of collision, using an estimated path of the host vehicle and an estimated path of a target detected.

When the collision determination unit 105 determines a possibility of collision, the braking control unit 106 determines the start of automatic braking, using a time to collision (TTC) and the like, and calculates a braking G instruction necessary for collision avoidance.

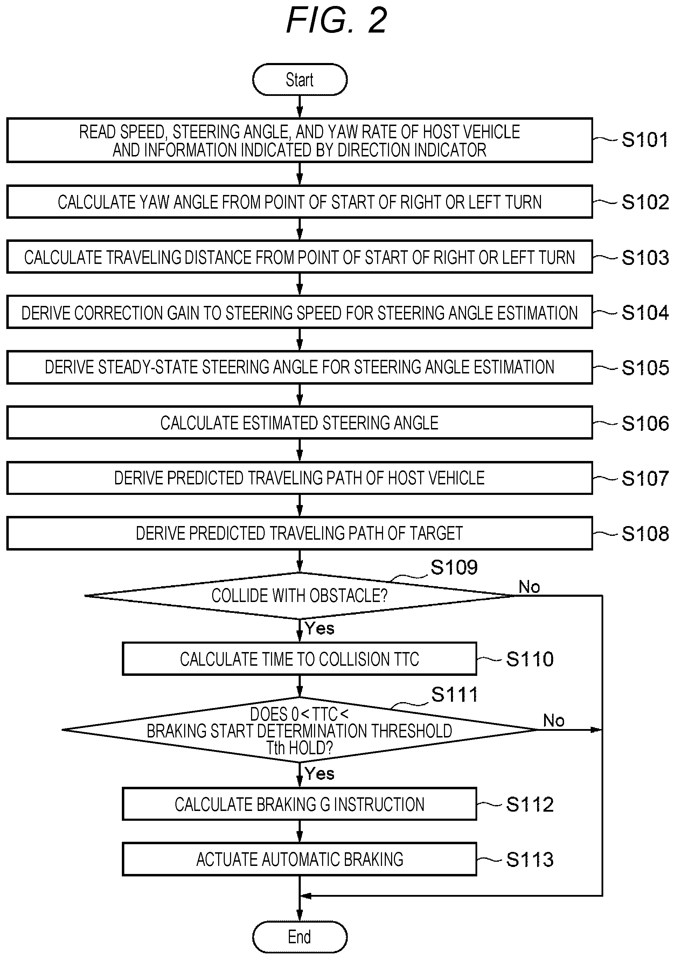

This embodiment relates to a case where the host vehicle traveling on a right lane toward an intersection on a highway with relatively large traffic needs to make a right turn at the intersection the host vehicle is heading for. Processes carried out by the AEB control processing unit 100 of this embodiment are shown in FIG. 2. This flow of processes is executed once in a given cycle (e.g., 50 ms) in the in-vehicle ECU that is the in-vehicle ADAS controller or AD controller.

First, at S101, a speed of the host vehicle (vehicle speed), a steering angle, a yaw rate, and information indicated by the direction indicator are read.

At S102, a yaw angle from the point of start of the host vehicle's right or left turn is calculated, using the steering angle, yaw rate, and information indicated by the direction indicator that have been read at S101 (the yaw angle estimation unit 101). Yaw angle calculation starts under a condition that, for example, the direction indicator is on and that the steering wheel is turned in the same direction as indicated by the direction indicator by a steering angle of 15 degrees or more.

At S103, a traveling distance from the point of start of the host vehicle's right or left turn is calculated, using the speed of the host vehicle (vehicle speed) read at S101 (the traveling distance estimation unit 102). Traveling distance calculation starts under a condition that, for example, the direction indicator is on and that the steering wheel is turned in the same direction as indicated by the direction indicator by a steering angle of 15 degrees or more.

At S104, a correction gain to a steering speed for steering angle estimation is derived.

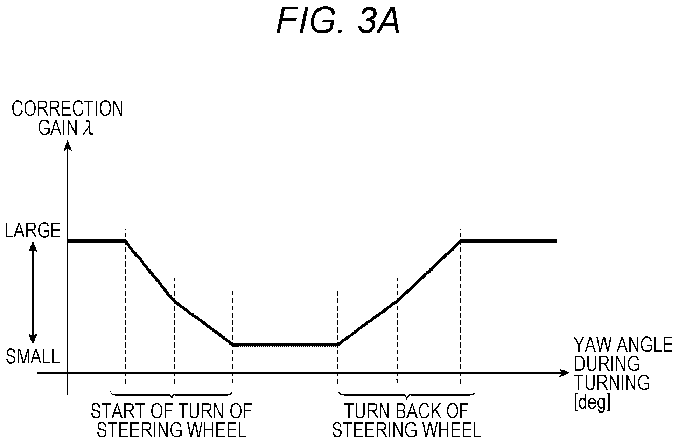

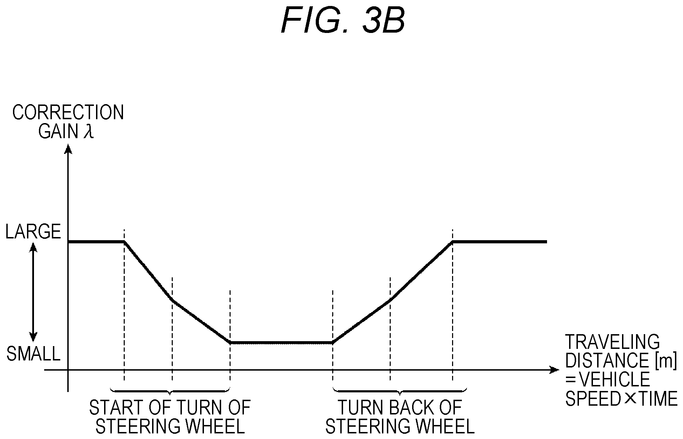

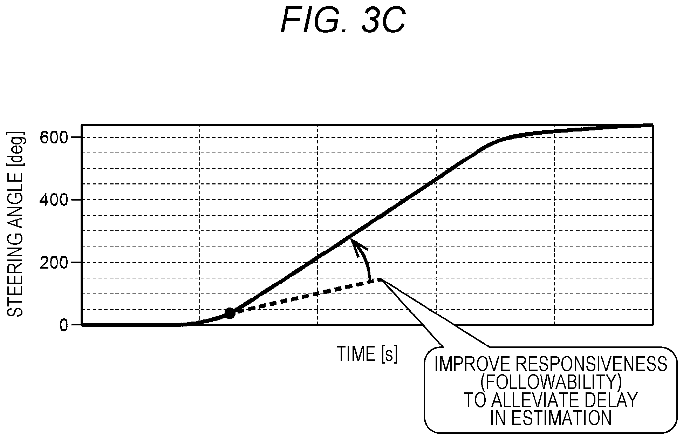

In deriving the correction gain, for example, a correction gain λ is set according to the yaw angle from the point of start of the host vehicle's right or left turn, the yaw angle having been calculated at S102, as shown in FIG. 3A. Alternatively, the correction gain λ is set according to the traveling distance from the point of start of the host vehicle's right or left turn, the traveling distance having been calculated at S103, as shown in FIG. 3B. To improve followability at the start of turn of the steering wheel and at turn back of the steering wheel, for example, the correction gain λ that increases at the start of turn of the steering wheel and at turn back of the steering wheel (increases at a yaw angle or traveling distance corresponding to the start of turn of the steering wheel and turn back of the steering wheel) is set. As a result, as shown in FIG. 3C, responsiveness (followability) is improved to alleviate a delay in prediction.

At S105, a steady-state steering angle for steering angle estimation is derived.

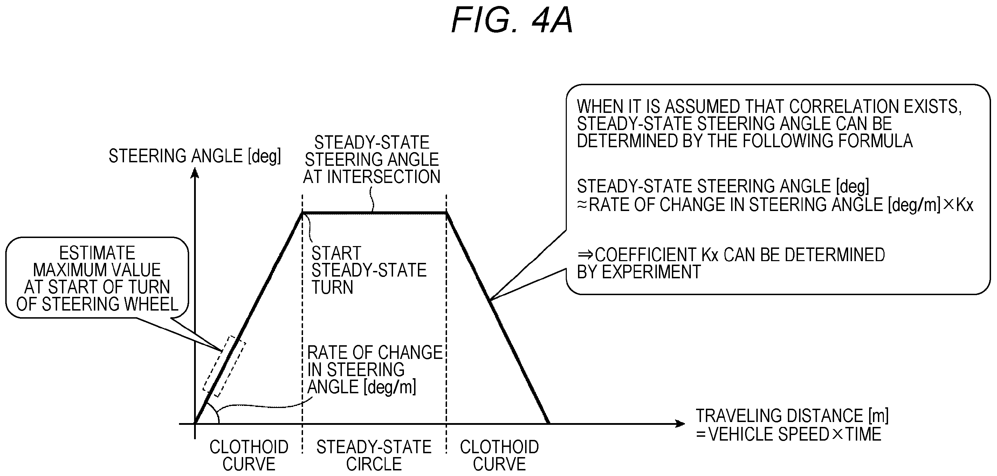

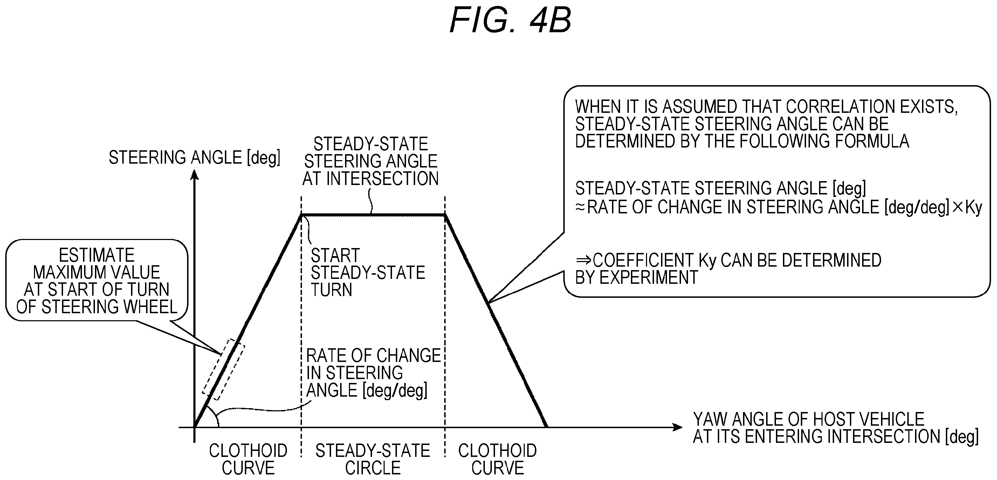

In deriving the steady-state steering angle for steering angle estimation, for example, the steady-state steering angle is derived based on a fact that when it is assumed that the vehicle making a right or left turn at an intersection travels along the identical traveling track regardless of the vehicle's speed, a correlation between a rate of change of a steering angle [deg/m] with respect to a traveling distance and the steady-state steering angle exists, as shown in FIG. 4A. When it is assumed that the correlation exists, the steady-state steering angle [deg] can be obtained by a formula: the rate of change of the steering angle [deg/m]×kx. This steady-state steering angle calculation formula using the rate of change of the steering angle (especially, a coefficient kx of the formula) is identified from experimental data. It should be noted, however, that, as shown in FIG. 4B, when a yaw angle of the host vehicle at its entering the intersection (that is, the rate of change of the steering angle [deg/deg] with respect to the yaw angle of the host vehicle at its entering the intersection) is used in place of the traveling distance, the steady-state steering angle can be derived in the same manner.

At S106, an estimated steering angle is calculated. A steering speed of the driver is calculated from a steering angle detected by the steering angle sensor 503 and then the estimated steering angle is calculated based on the calculated steering speed and the correction gain λ determined at S104. The estimated steering angle is calculated, for example, using the following formula (1).

(Formula 1)

$$\delta_T = \delta_{T-1} + \dot{\delta}\lambda\Delta t \quad \cdots \quad (1)$$

T: future time during estimation (initial value =0)
$\delta_{-1}$: steering angle sensor value
$\dot{\delta}$: steering speed (value right before prediction)
$\lambda$: correction gain
$\Delta t$: sampling time in the estimation process (e.g., 0.1 s)

It should be noted that the estimated steering angle is limited to prevent it from exceeding the steady-state steering angle ($\approx$ maximum steering angle) at the time of making a right or left turn at an intersection, the steady-state steering angle being determined at S105 from the vehicle's behavior at an initial stage of its turning.

At S107, a predicted path of the host vehicle is derived. The predicted path of the host vehicle is calculated by integrating a vehicle speed, a wheelbase, a steering gear ratio, and an estimated steering angle. A process involving S104 to S107 is executed by the host vehicle traveling path estimation unit 103.

At step S108, a predicted path of a target is derived (the target traveling path estimation unit 104). The predicted path of the target detected is calculated by determining a ground speed vector of the target from a relative speed vector of the target, while taking account of the translational movement and rotational movement of the host vehicle, and integrating the ground speed vector.

At S109, whether the host vehicle collides with the obstacle (target) is determined, using the predicted path of the host vehicle obtained at S107 and the predicted path of the target obtained at S108 (the collision determination unit 105). When it is determined that the host vehicle collides with the obstacle, the process flow proceeds to S110. Otherwise, the process flow ends. Improving the responsiveness and accuracy of estimation of the predicted path of the host vehicle at S107 reduces malfunctions of the AEB system and enables earlier actuation of the AEB system to a normal operation target.

At S110, a time to collision TTC [s] is calculated. TTC can be calculated by, for example, the following formula (2).
(Formula 2)

$$TTC = \frac{d}{V_{rel}} \quad \cdots \quad (2)$$

d: relative front-to-rear distance between the host vehicle and the obstacle [m]
$V_{rel}$: relative velocity of the host vehicle to the obstacle [m/s]

At S111, whether TTC is smaller than a preset braking start determination threshold Tth [s] is determined. When TTC is smaller than the preset braking start determination threshold Tth [s], the process flow proceeds to S112. Otherwise, the process flow ends.

At S112, a braking G instruction Gcmd [m/s²] necessary for collision avoidance is calculated. Gcmd can be calculated by, for example, the following formula (3).
(Formula 3)

$$Gcmd = \frac{V^2}{2d} \quad \cdots \quad (3)$$

V: host vehicle speed [m/s]
d: relative front-to-rear distance between the host vehicle and the obstacle [m]

When the accuracy of future estimation is high, a lower Tth value is set. This leads to earlier actuation of the system, in which case the value of d is large at the point of braking. The larger value of d makes the value of Gcmd smaller, which means sudden braking is avoided.

At S113, to actuate the automatic braking, the braking G instruction calculated at S112 is transmitted to the brake actuator 300 via the VMC 200. A process involving S110 to S113 is executed by the braking control unit 106.

In addition to actuation of the above automatic braking (braking operation) or before actuation of the above automatic braking (braking operation), an alarm may be issued to the driver of the host vehicle, based on a determination result given by the collision determination unit 105.

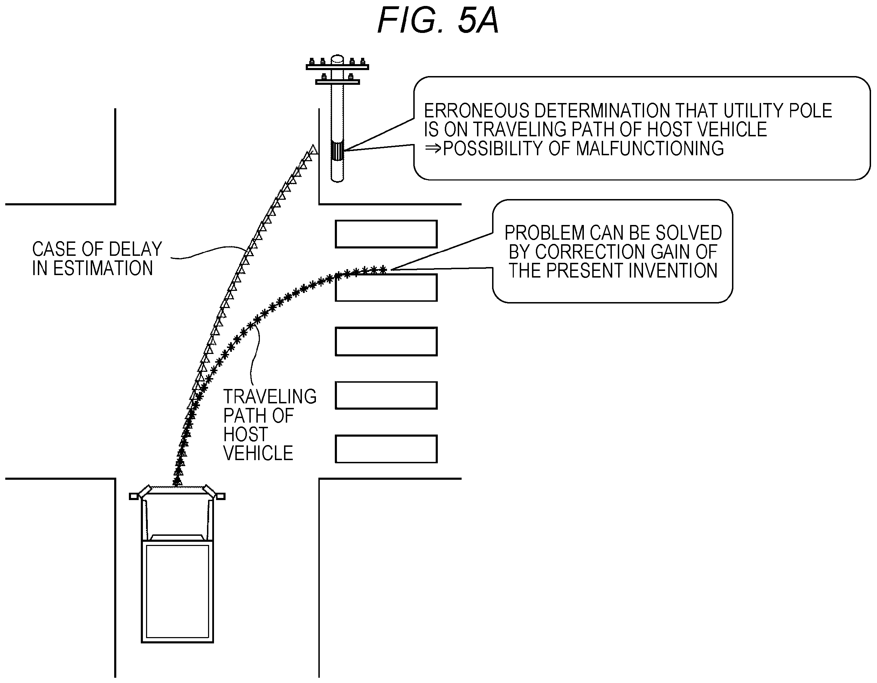

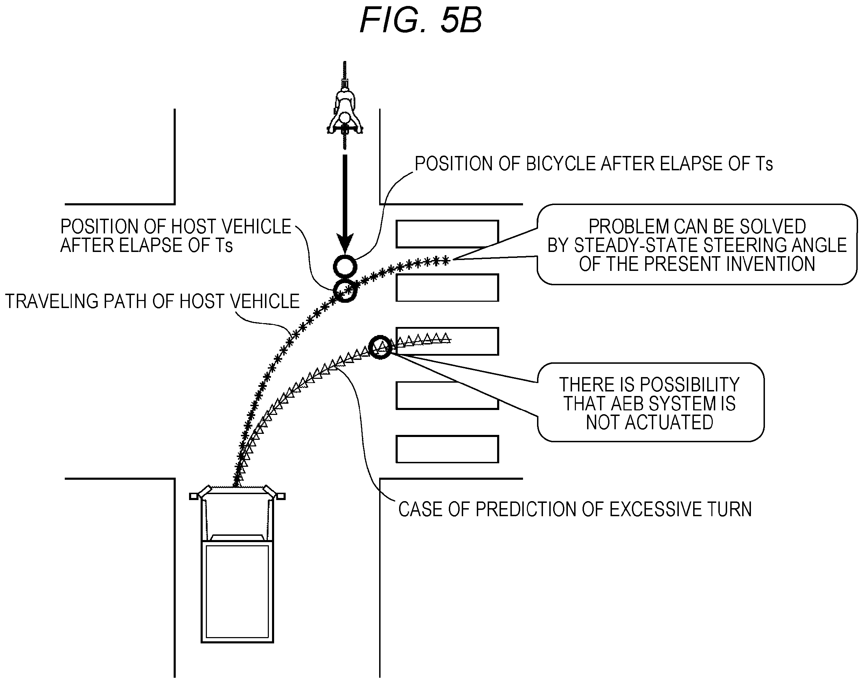

As shown in FIG. 5A, a delay in prediction raises a possibility that, having erroneously determined that the target is on the traveling path of the host vehicle, the system malfunctions as a consequence. This problem, however, can be solved by the correction gain of the present invention. In addition, as shown in FIG. 5B, prediction of an excessive turn raises a possibility that, having erroneously determined that the target is not on the traveling path of the host vehicle, the system is not actuated. This problem, however, can be solved by the steady-state steering angle (≈ maximum steering angle) of the present invention.

As described above, a future steering angle is estimated highly responsively from a yaw angle during turning as a change in a steering speed at the start of turn of the steering wheel and at turn back of the steering wheel is taken into consideration, the estimated steering angle is limited to prevent it from exceeding a steady-state steering angle (≈ maximum steering angle) at the time of making a right or left turn at an intersection, the steady-state steering angle being determined from the vehicle's behavior at an initial stage of its turning, and the responsiveness and accuracy of estimation of a predicted path of the host vehicle is improved at S107. This reduces malfunctions of the AEB system and enables earlier actuation of the AEB system to a normal operation target.

[Second Embodiment]

A second embodiment of the present invention will then be described.

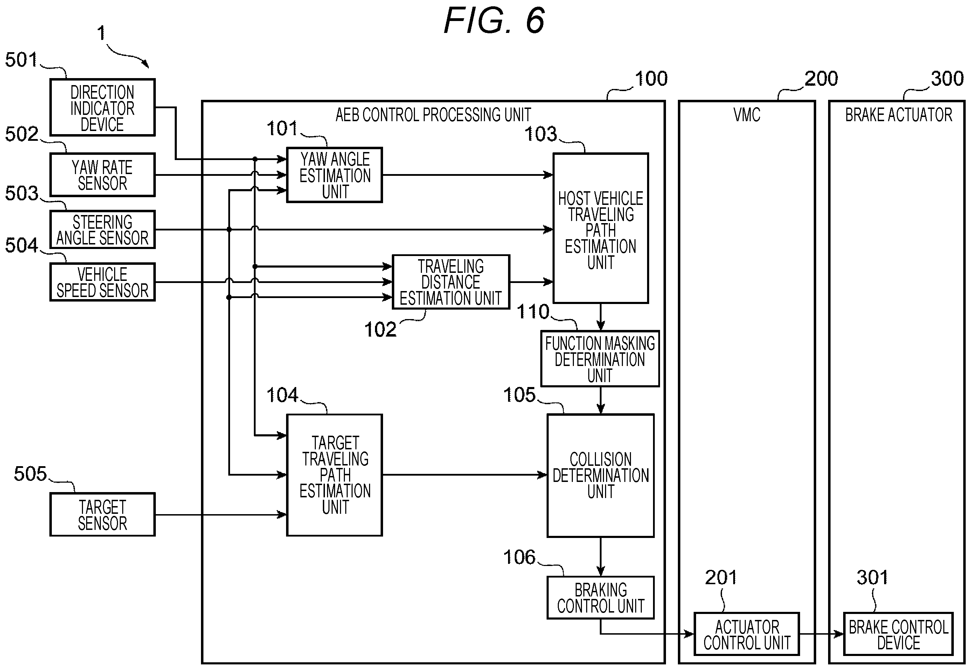

FIG. 6 is a block diagram of an AEB system according to the second embodiment.

As shown in FIG. 6, the AEB control processing unit 100 of the AEB system 1 of the second embodiment includes, as its internal function, a function masking determination unit 110, in addition to the components of the AEB control processing unit 100 of the first embodiment.

When determining that an intersection is of a special shape widely different from a given shape (e.g., a shape the host vehicle approaches at a right angle), based on a yaw angle, the function masking determination unit 110 masks a function of the AEB system to avoid a situation where the function does not work correctly.

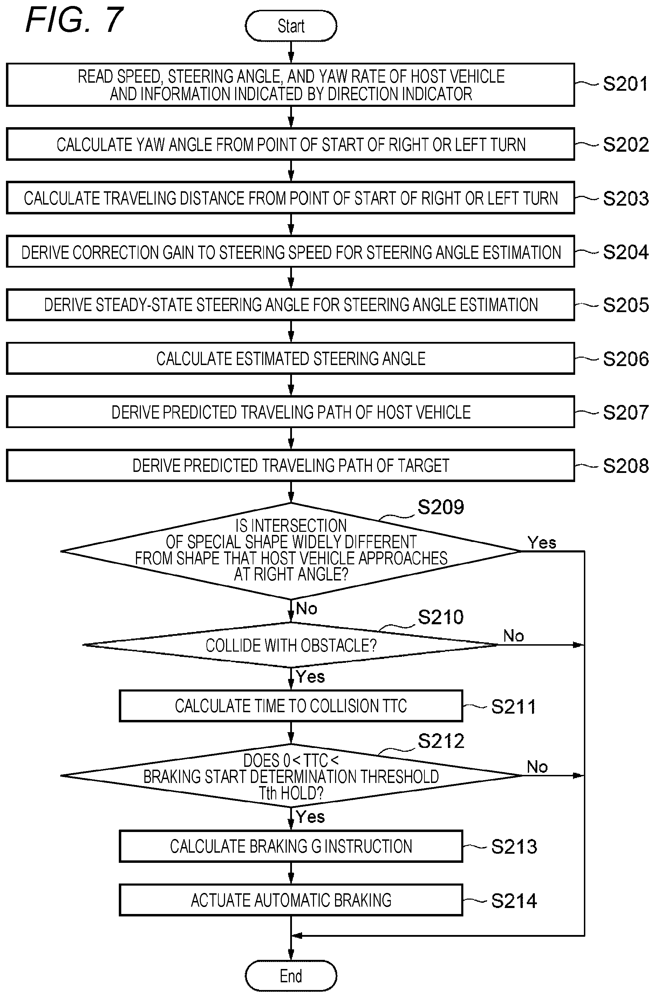

Similar to the first embodiment, this embodiment relates to a case where the host vehicle traveling on a right lane toward an intersection on a highway with relatively large traffic needs to make a right turn at the intersection the host vehicle is heading for. Processes carried out by the AEB control processing unit 100 of this embodiment is shown in FIG. 7. In contrast with the first embodiment, this embodiment includes a process of masking a driving assist function to avoid a situation where the driving assist function does not work correctly. This process is executed when it is determined that the intersection is of a special shape widely different from the given shape (e.g., a shape the host vehicle approaches at a right angle), based on a yaw angle from the point of start of the host vehicle's right or left turn.

A process involving S201 to S208 and S210 to S214 is the same as the process involving S101 to S113 of the first embodiment, and is therefore omitted in further description.

At S209, whether the intersection is of a special shape widely different from the given shape (a shape the host vehicle approaches perpendicularly, i.e., at a right angle) is determined. When it is determined that the intersection is of the special shape, the process flow ends, and when the intersection is not of the special shape, the process flow proceeds to S210. To determine that the intersection is of the special shape widely different from the given shape (a shape the host vehicle approaches perpendicularly, i.e., at a right angle), for example, one or more of the following conditions need to be met.

(1) At the start of turn of the steering wheel, a steering angle is equal to or smaller than a given value of 1 when the yaw angle from the point of start of the host vehicle's right or left turn becomes equal to or larger than a given value of 1.

(2) At turn back of the steering wheel, the steering angle is equal to or larger than a given value of 2 when the yaw angle from the point of start of the host vehicle's right or left turn becomes equal to or larger than a given value of 2.

("equal to or larger than/equal to or smaller than" refers to the size of a value for which the left and right directions are taken into consideration)

As described above, according to the second embodiment, in contrast with the first embodiment, when it is determined that the intersection is of the special shape widely different from the given shape (e.g., a shape the host vehicle approaches at a right angle), based on the yaw angle from the point of start of the host vehicle's right or left turn, the driving assist function (function for collision avoidance control) is masked to avoid a situation where the driving assist function does not work correctly.

[Summary of First and Second Embodiments]

As described above, the vehicle control device (AEB control processing unit 100) of the embodiments is the vehicle control device that controls the host vehicle making a turn and traveling in an intersection. The vehicle control device includes: the target sensor 505 that detects a target present around the host vehicle; the target traveling path estimation unit 104 that estimates a traveling path of the target detected by the target sensor 505; the steering angle sensor 503 that detects a steering angle of the host vehicle being traveling; and the vehicle position estimation unit (host vehicle traveling path estimation unit 103) that calculates a steering speed (a variation in a steering angle per unit time) from the steering angle detected by the steering angle sensor 503, that estimates a future steering angle, based on the steering speed and on a given correction gain, that estimates a maximum value of a steady-state steering angle (≈ maximum steering angle) in estimation of the future steering angle, based on a rate of change in the steering angle (a variation in the steering angle with respect to a yaw angle or a traveling distance), and that estimates a future position (traveling path) of the host vehicle, based on the future steering angle and on the maximum value of the steady-state steering angle (≈ maximum steering angle).

The vehicle control device further includes the yaw angle estimation unit 101 that estimates a yaw angle from the point of start of the host vehicle's right or left turn, and the given correction gain is determined based on the yaw angle estimated by the yaw angle estimation unit 101. Alternatively, the vehicle control device further includes the traveling distance estimation unit 102 that estimates a traveling distance from the point of start of the host vehicle's right or left turn, and the given correction gain is determined based on the traveling distance estimated by the traveling distance estimation unit 102.

The maximum value of the steady-state steering angle (≈ maximum steering angle) is determined based on the yaw angle estimated by the yaw angle estimation unit 101. Alternatively, the maximum value of the steady-state steering angle (≈ maximum steering angle) is determined based on the traveling distance estimated by the traveling distance estimation unit 102.

The vehicle control device further includes the yaw angle estimation unit 101 that estimates a yaw angle from the point of start of the host vehicle's right or left turn, and the function masking determination unit 110 that masks the function for collision avoidance control, based on the yaw angle estimated by the yaw angle estimation unit 101, in order to avoid a situation where the function does not work correctly in a special road shape that makes a shape of the intersection different from a given shape (e.g., a shape the host vehicle approached at a right angle).

In the embodiments, for example, a future steering angle is estimated highly responsively from a yaw angle during turning as a change in a steering speed at the start of turn of the steering wheel and at turning back of the steering wheel is taken into consideration, and the estimated steering angle is limited to prevent it from exceeding the steady-state steering angle (≈ maximum steering angle) at the time of making a right or left turn at an intersection, the steady-state steering angle being determined from the vehicle's behavior at an initial stage of its turning. This prevents overestimation.

According to the embodiments, improving the responsiveness and accuracy of estimation of the traveling path of the host vehicle reduces malfunctions of the AEB system and enables earlier actuation of the AEB system to a normal operation target.

The embodiments of the present invention have been described in detail above. The present invention, however, is not limited to these embodiments, and may be modified into various modes on condition that such modes do not depart from the spirit of the present invention described in the claims. For example, the above embodiments have been described in detail to give an understandable description of the present invention, and are not necessarily limited to an embodiment including all constituent elements described above. Some of constituent elements of one embodiment can be replaced with constituent elements of another embodiment, and a constituent element of another embodiment can be added to a constituent element of one embodiment. Furthermore, some of constituent elements of each embodiment can be deleted or added to or replaced with different constituent elements.

Some or all of the above-described constituent elements, functions, processing units, processing means, and the like may be provided in the form of hardware by, for example, packaging them into an integrated circuit. Each of the above-described constituent elements, functions, and the like may be provided in the form of software by a processor that interprets and executes a program for implementing each function. Information, such as a program, a table, and a file, for implementing each function can be stored in a storage device, such as a memory, a hard disk, and a solid state drive (SSD), or in a recording medium, such as an IC card, an SD card, and a DVD.

Control lines and information lines considered to be necessary for the description are indicated, and control lines and information lines the product needs are not necessarily indicated entirely. It is safe to consider that actually, almost all constituent elements are interconnected.

Reference Signs List

    1 AEB system
    100 AEB control processing unit (vehicle control device)

    101 yaw angle estimation unit
    102 traveling distance estimation unit
    103 host vehicle traveling path estimation unit (vehicle position estimation unit)
    104 target traveling path estimation unit
    105 collision determination unit
    106 braking control unit
    110 function masking determination unit (second embodiment)
    501 direction indicator device
    502 yaw rate sensor
    503 steering angle sensor
    504 vehicle speed sensor
    505 target sensor

**Claims**

1. A vehicle control device that controls a host vehicle making a turn and traveling in an intersection, the vehicle control device comprising:

    a target sensor that detects a target present around the host vehicle;
    a target traveling path estimation unit that estimates a traveling path of the target detected by the target sensor;
    a steering angle sensor that detects a steering angle of the host vehicle being traveling; and
    a vehicle position estimation unit that calculates a steering speed from the steering angle detected by the steering angle sensor, estimates a future steering angle, based on the steering speed and a given correction gain, estimates a maximum value of a steady-state steering angle in estimation of the future steering angle, based on a rate of change in the steering angle, and estimates a future position of the host vehicle, based on the future steering angle and the maximum value of the steady-state steering angle.

2. The vehicle control device according to claim 1, further comprising

    a yaw angle estimation unit that estimates a yaw angle from a point of start of a right or left turn of the host vehicle, wherein
    the given correction gain is determined based on the yaw angle estimated by the yaw angle estimation unit.

3. The vehicle control device according to claim 1, further comprising

    a traveling distance estimation unit that estimates a traveling distance from a point of start of a right or left turn of the host vehicle, wherein
    the given correction gain is determined based on the traveling distance estimated by the traveling distance estimation unit.

4. The vehicle control device according to claim 1, further comprising

a yaw angle estimation unit that estimates a yaw angle from a point of start of a right or left turn of the host vehicle, wherein
the maximum value of the steady-state steering angle is determined based on the yaw angle estimated by the yaw angle estimation unit.

5. The vehicle control device according to claim 1, further comprising

a traveling distance estimation unit that estimates a traveling distance from a point of start of a right or left turn of the host vehicle, wherein
the maximum value of the steady-state steering angle is determined based on the traveling distance estimated by the traveling distance estimation unit.

6. The vehicle control device according to claim 1, further comprising

a collision determination unit that determines whether the host vehicle collides with the target, based on an estimated future position of the host vehicle and an estimated traveling path of the target, wherein
the vehicle control device issues an alarm to a driver of the host vehicle or applies braking to the host vehicle, based on a determination result of the collision determination unit.

7. The vehicle control device according to claim 1, further comprising:

a yaw angle estimation unit that estimates a yaw angle from a point of start of a right or left turn of the host vehicle; and
a function masking determination unit that masks a function for collision avoidance control, based on the yaw angle estimated by the yaw angle estimation unit, in order to avoid a situation where the function does not work correctly in a special road shape that makes a shape of the intersection different from a given shape.

## FIG. 1

EP 4 597 470 A1

# FIG. 2

Start

READ SPEED, STEERING ANGLE, AND YAW RATE OF HOST VEHICLE AND INFORMATION INDICATED BY DIRECTION INDICATOR — S101

CALCULATE YAW ANGLE FROM POINT OF START OF RIGHT OR LEFT TURN — S102

CALCULATE TRAVELING DISTANCE FROM POINT OF START OF RIGHT OR LEFT TURN — S103

DERIVE CORRECTION GAIN TO STEERING SPEED FOR STEERING ANGLE ESTIMATION — S104

DERIVE STEADY-STATE STEERING ANGLE FOR STEERING ANGLE ESTIMATION — S105

CALCULATE ESTIMATED STEERING ANGLE — S106

DERIVE PREDICTED TRAVELING PATH OF HOST VEHICLE — S107

DERIVE PREDICTED TRAVELING PATH OF TARGET — S108

S109

COLLIDE WITH OBSTACLE?   No

Yes

CALCULATE TIME TO COLLISION TTC — S110

S111

DOES $0 < TTC <$ BRAKING START DETERMINATION THRESHOLD $T_{th}$ HOLD?   No

Yes

CALCULATE BRAKING G INSTRUCTION — S112

ACTUATE AUTOMATIC BRAKING — S113

End

# FIG. 3A

# FIG. 3B

CORRECTION
GAIN λ

LARGE

SMALL

START OF TURN OF
STEERING WHEEL

TURN BACK OF
STEERING WHEEL

TRAVELING
DISTANCE [m]
=VEHICLE
SPEED×TIME

## FIG. 3C

STEERING ANGLE [deg]

TIME [s]

IMPROVE RESPONSIVENESS
(FOLLOWABILITY)
TO ALLEVIATE DELAY
IN ESTIMATION

## FIG. 4A

STEERING ANGLE [deg]

STEADY-STATE STEERING ANGLE AT INTERSECTION

ESTIMATE MAXIMUM VALUE AT START OF TURN OF STEERING WHEEL

START STEADY-STATE TURN

RATE OF CHANGE IN STEERING ANGLE [deg/m]

WHEN IT IS ASSUMED THAT CORRELATION EXISTS, STEADY-STATE STEERING ANGLE CAN BE DETERMINED BY THE FOLLOWING FORMULA

STEADY-STATE STEERING ANGLE [deg] $\approx$ RATE OF CHANGE IN STEERING ANGLE [deg/m] $\times$ Kx

$\Rightarrow$ COEFFICIENT Kx CAN BE DETERMINED BY EXPERIMENT

TRAVELING DISTANCE [m] = VEHICLE SPEED $\times$ TIME

CLOTHOID CURVE | STEADY-STATE CIRCLE | CLOTHOID CURVE

EP 4 597 470 A1

## FIG. 4B

WHEN IT IS ASSUMED THAT CORRELATION EXISTS, STEADY-STATE STEERING ANGLE CAN BE DETERMINED BY THE FOLLOWING FORMULA

STEADY-STATE STEERING ANGLE [deg] $\approx$ RATE OF CHANGE IN STEERING ANGLE [deg/deg] $\times$ Ky

$\Rightarrow$ COEFFICIENT Ky CAN BE DETERMINED BY EXPERIMENT

STEERING ANGLE [deg]

STEADY-STATE STEERING ANGLE AT INTERSECTION

ESTIMATE MAXIMUM VALUE AT START OF TURN OF STEERING WHEEL

START STEADY-STATE TURN

RATE OF CHANGE IN STEERING ANGLE [deg/deg]

YAW ANGLE OF HOST VEHICLE AT ITS ENTERING INTERSECTION [deg]

CLOTHOID CURVE

STEADY-STATE CIRCLE

CLOTHOID CURVE

EP 4 597 470 A1

# FIG. 5A

ERRONEOUS DETERMINATION THAT UTILITY POLE IS ON TRAVELING PATH OF HOST VEHICLE ⇒POSSIBILITY OF MALFUNCTIONING

PROBLEM CAN BE SOLVED BY CORRECTION GAIN OF THE PRESENT INVENTION

CASE OF DELAY IN ESTIMATION

TRAVELING PATH OF HOST VEHICLE

*FIG. 5B*

POSITION OF BICYCLE AFTER ELAPSE OF Ts

PROBLEM CAN BE SOLVED BY STEADY-STATE STEERING ANGLE OF THE PRESENT INVENTION

THERE IS POSSIBILITY THAT AEB SYSTEM IS NOT ACTUATED

CASE OF PREDICTION OF EXCESSIVE TURN

POSITION OF HOST VEHICLE AFTER ELAPSE OF Ts

TRAVELING PATH OF HOST VEHICLE

## FIG. 6

## FIG. 7

Start

READ SPEED, STEERING ANGLE, AND YAW RATE OF HOST VEHICLE AND INFORMATION INDICATED BY DIRECTION INDICATOR — S201

CALCULATE YAW ANGLE FROM POINT OF START OF RIGHT OR LEFT TURN — S202

CALCULATE TRAVELING DISTANCE FROM POINT OF START OF RIGHT OR LEFT TURN — S203

DERIVE CORRECTION GAIN TO STEERING SPEED FOR STEERING ANGLE ESTIMATION — S204

DERIVE STEADY-STATE STEERING ANGLE FOR STEERING ANGLE ESTIMATION — S205

CALCULATE ESTIMATED STEERING ANGLE — S206

DERIVE PREDICTED TRAVELING PATH OF HOST VEHICLE — S207

DERIVE PREDICTED TRAVELING PATH OF TARGET — S208

S209
IS INTERSECTION OF SPECIAL SHAPE WIDELY DIFFERENT FROM SHAPE THAT HOST VEHICLE APPROACHES AT RIGHT ANGLE? — Yes

No

S210
COLLIDE WITH OBSTACLE? — No

Yes

CALCULATE TIME TO COLLISION TTC — S211

S212
DOES 0 < TTC < BRAKING START DETERMINATION THRESHOLD Tth HOLD? — No

Yes

CALCULATE BRAKING G INSTRUCTION — S213

ACTUATE AUTOMATIC BRAKING — S214

End

## INTERNATIONAL SEARCH REPORT

| International application No. |
| --- |
| **PCT/JP2022/035818** |

| A. | CLASSIFICATION OF SUBJECT MATTER |
| --- | --- |

*G08G 1/16*(2006.01)i
FI:   G08G1/16 C

According to International Patent Classification (IPC) or to both national classification and IPC

| B. | FIELDS SEARCHED |
| --- | --- |

Minimum documentation searched (classification system followed by classification symbols)

G08G1/16

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2021/044811 A1 (HITACHI AUTOMOTIVE SYSTEMS LTD) 11 March 2021 (2021-03-11) entire text, all drawings | 1-7 |
| A | WO 2022/113472 A1 (HITACHI ASTEMO LTD) 02 June 2022 (2022-06-02) entire text, all drawings | 1-7 |
| A | WO 2020/008796 A1 (DENSO CORP) 09 January 2020 (2020-01-09) entire text, all drawings | 1-7 |
| A | JP 2017-16272 A (TOYOTA MOTOR CORP) 19 January 2017 (2017-01-19) entire text, all drawings | 1-7 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **01 December 2022** | **13 December 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

International application No.

**PCT/JP2022/035818**

| Patent document cited in search report | | | Publication date (day/month/year) | Patent family member(s) | | | Publication date (day/month/year) |
|---|---|---|---|---|---|---|---|
| WO | 2021/044811 | A1 | 11 March 2021 | EP 4026744 A1 entire text, all drawings | | | |
| WO | 2022/113472 | A1 | 02 June 2022 | (Family: none) | | | |
| WO | 2020/008796 | A1 | 09 January 2020 | JP 2020-6707 A entire text, all drawings | | | |
| JP | 2017-16272 | A | 19 January 2017 | (Family: none) | | | |

Form PCT/ISA/210 (patent family annex) (January 2015)

**REFERENCES CITED IN THE DESCRIPTION**

**Patent documents cited in the description**

- JP 2018106589 A